(19) Europäisches Patentamt

European Patent Office

Office européen des brevets

(11) **EP 1 555 159 B1**

(12) **EUROPEAN PATENT SPECIFICATION**

(45) Date of publication and mention
of the grant of the patent:
**27.12.2006 Bulletin 2006/52**

(51) Int Cl.:
***B60R 1/02*** *(2006.01)* ***G01C 21/26*** *(2006.01)*
***B60R 1/00*** *(2006.01)*

(21) Application number: **05250001.4**

(22) Date of filing: **04.01.2005**

(54) **Vehicle situation monitoring apparatus and vehicle situation monitoring method**

Vorrichtung und Verfahren zur Überwachung des Zustands eines Fahrzeugs

Dispositif et procédé de surveillance la condition d'un véhicule

(84) Designated Contracting States:
**DE FR GB**

(30) Priority: **16.01.2004 JP 2004009248**

(43) Date of publication of application:
**20.07.2005 Bulletin 2005/29**

(73) Proprietor: **NISSAN MOTOR CO., LTD.**
**Yokohama-shi,**
**Kanagawa 221-0023 (JP)**

(72) Inventor: **Komori, Kenji**
**Isehara-shi,**
**Kanagawa 259-1117 (JP)**

(74) Representative: **Godwin, Edgar James**
**Marks & Clerk**
**90 Long Acre**
**London WC2E 9RA (GB)**

(56) References cited:
**EP-A- 1 362 742**      **DE-A1- 10 016 222**
**US-A- 5 798 575**      **US-A1- 2003 043 479**

**Description**

The present invention relates to a vehicle situation monitoring apparatus and a vehicle situation monitoring method that facilitate verification of any vehicle traveling on a right-of-way line when a vehicle traveling on a yield line is to merge into the right-of-way line.

There is a vehicle control apparatus known in the related art that detects a merging vehicle on a yield line about to merge into a right-of-way line and alerts the driver to the level of proximity between the two vehicles determined based upon the positional relationship between the subject vehicle traveling on the right-of-way line and the merging vehicle and the speeds at which the two vehicles are traveling (see Japanese Laid Open Patent Publication No. H8-263793).

However, the vehicle control apparatus in the related art, which detects a merging vehicle at a merging point based upon information transmitted from a transmission device installed in another vehicle or on the road, needs to include a communication device and also a device capable of determining the level of proximity between the subject vehicle and the merging vehicle, necessitating an increase in production costs. EP 1, 362, 742A discloses an image pickup apparatus and control method, in which a CPU determines a vehicle's position on a road and provides a driver with a display dependent the features of the road including providing images to a driver of the circumstances outside the vehicle.

A vehicle situation monitoring apparatus according to the present invention includes a merging point decision-making means for making a decision as to whether or not a merging point of a road on which a subject vehicle is traveling and another road is present ahead the road on which the subject vehicle is traveling, and a control means for adjusting the angle or a vehicle situation checking device with which the driver is able to visually check the traffic situation if the merging point decision-making means determines that a merging point is present.

A vehicle situation monitoring method according to the present invention includes steps for making a decision as to whether or not a merging point of a road on which a subject vehicle is traveling and another road is present ahead on the road on which the subject vehicle is traveling, and adjusting the angle of a vehicle situation checking device with which the driver is able to visually check the traffic situation if a merging point is determined to be present.

BRIEF DESCRIPTION OF THE DRAWINGS

FIG. 1 shows the structure adopted in a first embodiment of the vehicle situation monitoring apparatus according to the present invention;

FIG. 2A shows the range of the visual field of the right side mirror of a vehicle on a yield line about to merge into a right-of-way line and FIG. 2B shows the visual field range achieved by adjusting the mirror surface angle;

FIG. 3 shows an example of the positions of the control start point and the control end point set for the mirror surface angle adjustment control;

FIG. 4 shows data indicating the positional coordinates of control start points, extents of mirror surface angle adjustment and positional coordinates of the control end points;

FIG. 5 presents a flowchart of the control executed by the vehicle situation monitoring apparatus in the first embodiment;

FIG. 6 shows the structure adopted in a second embodiment of the vehicle situation monitoring apparatus;

FIG. 7 shows how the control start point for the mirror surface angle adjustment control may be altered in correspondence to the vehicle speed;

FIG. 8 shows the relationships among the control start point x1 selected when the vehicle speed is equal to or higher than 10 km/h, the control start point x2 set when the vehicle speed is lower than 10 km/h, the control end point y and the extent of mirror surface angle adjustment;

FIG. 9 presents a flowchart of the control executed by the vehicle situation monitoring apparatus in the second embodiment;

FIG. 10A shows the range of the visual field of the right side mirror when the radius R of the curve in the yield line is large and FIG. 10B shows the range of the visual field of the right side mirror when the radius R of the curve in the yield line is small;

FIG. 11 shows the relationships among the radius R of the curve in the yield line, the position at which the mirror surface angle adjustment is started and the extent of the mirror surface angle adjustment;

FIG. 12 illustrates a method adopted to calculate the curve radius R;

FIG. 13 presents a flowchart of the control executed by the vehicle situation monitoring apparatus in a third embodiment;

FIG. 14 shows the relationships among the radius R of the curve in the yield line, the position at which the mirror surface angle adjustment is started in correspondence to the vehicle speed and the extent of the mirror surface angle adjustment;

FIG. 15 presents a flowchart of the control executed by the vehicle situation monitoring apparatus in a fourth embodiment;

FIG. 16 shows the structure adopted in a fifth embodiment of the vehicle situation monitoring apparatus;

FIG. 17 shows the relationship between the steering wheel steering angle and the extent of the mirror surface angle adjustment at the right side mirror;

FIG. 18 presents a flowchart of the control executed by the vehicle situation monitoring apparatus in the fifth embodiment; and

FIG. 19 shows the structure of a vehicle situation monitoring apparatus equipped with an on-vehicle camera.

DETAILED DESCRIPTION OF THE PREFERRED EMBODIMENTS

-First Embodiment-

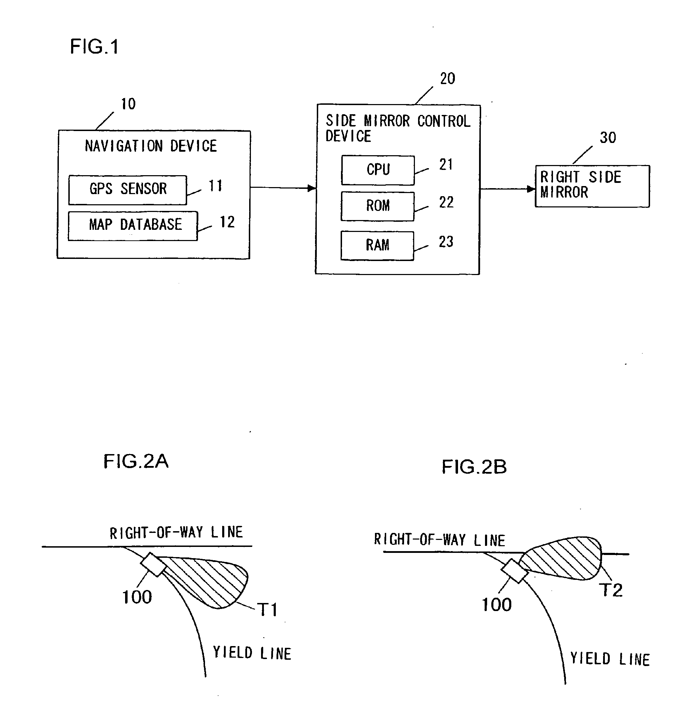

In a following explanation, we explain a case where drivers drive a car in a country where drivers keep to the left side of the road. FIG. 1 shows the structure adopted in the first embodiment of the vehicle situation monitoring apparatus according to the present invention. The vehicle situation monitoring apparatus achieved in the first embodiment includes a navigation device 10, a side mirror control device 20, and a right side mirror 30 and adjusts the mirror surface angle of the right side mirror (outside rearview mirror on the right side) 30 by adopting the method to be detailed later. The angle of the mirror surface of the right side mirror 30 can be adjusted at least to the left and to the right.

The navigation device 10 includes at least a GPS sensor 11 and a map database 12. Based upon radio waves originating from a GPS satellite (not shown), the GPS sensor 11 detects the current position of the vehicle. Map data are stored in the map database 12.

The side mirror control device 20, which includes a CPU 21, a ROM 22, and a RAM 23, controls the mirror surface angle of the right side mirror 30 as explained later. FIGS. 2A and 2B illustrate how the side mirror control device 20 controls the right side mirror 30. FIGS. 2A and 2B show a vehicle 100 traveling on a yield line about to merge into a right-of-way line.

FIG. 2A shows a range T1 of the visual field of the right side mirror 30 before the mirror surface angle is adjusted. As shown in FIG. 2A, the range of the visual field that can be checked by the driver with the right side mirror 30 normally lies to the rear of the subject vehicle on the right side. For this reason, the driver of the vehicle 100 traveling on the yield line needs to shoulder check for vehicles traveling on the right-of-way line before reaching the merging point.

FIG. 2B shows a range T2 of the visual field achieved by the vehicle situation monitoring apparatus in the first embodiment by adjusting the mirror surface angle of the right side mirror 30. The vehicle situation monitoring apparatus in the first embodiment tilts the mirror surface of the right side mirror 30 toward the right-of-way line, i.e., to the right, when the vehicle 100 traveling on the yield line is about to merge into the right-of-way line. As a result, the driver of the vehicle 100 is able to check for vehicles traveling on the right-of-way line with the right side mirror 30.

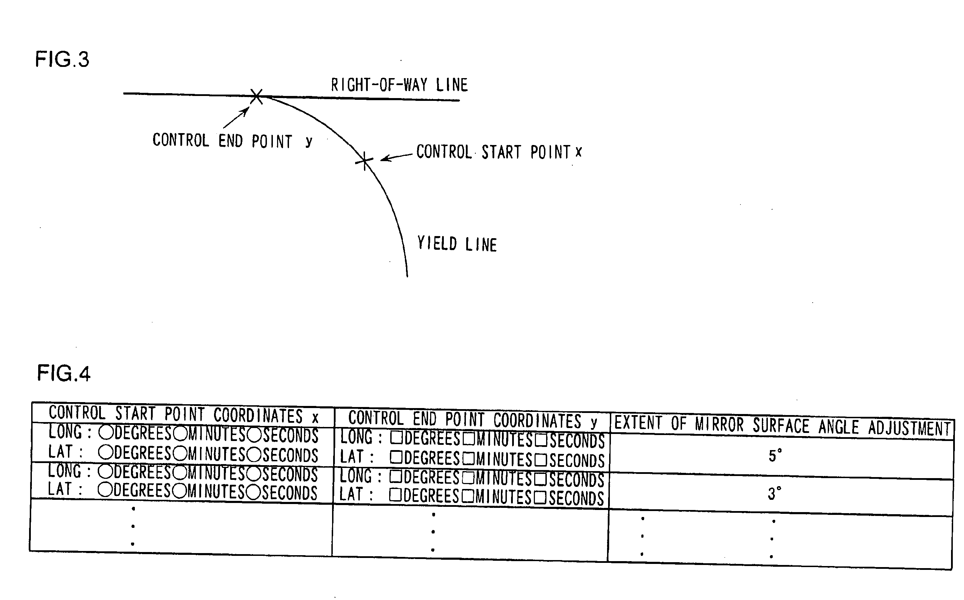

Data indicating the positional coordinates x of the control start point for control through which the mirror surface angle of the right side mirror 30 is adjusted, the extent of the mirror surface angle adjustment and the positional coordinates y of the control end point to be used when the vehicle traveling on a yield line is to merge into a right-of-way line are stored in the ROM 22 of the side mirror control device 20. FIG. 3 shows an example of the start point and the end point for the mirror surface angle adjustment control.

FIG. 4 shows data indicating the positional coordinates of the control start points, extents of the mirror surface angle adjustment and the positional coordinates of the control end points, which are stored in the ROM 22. These data indicating values determined in advance in correspondence to the positional relationships between individual yield lines and right-of-way lines for a plurality of merging points are stored in advance in the ROM 22.

The CPU 21 in the side mirror control device 20 adjusts the mirror surface angle of the right side mirror 30 based upon the current position of the subject vehicle detected with the GPS sensor 11 and the data stored in the ROM 22. Namely, as the vehicle traveling on a yield line reaches the control start point at which the mirror surface angle adjustment control is started, the CPU 21 starts to adjust the mirror surface angle of the right side mirror 30 based upon the mirror surface angle stored in the ROM 22 in correspondence to the particular control start point.

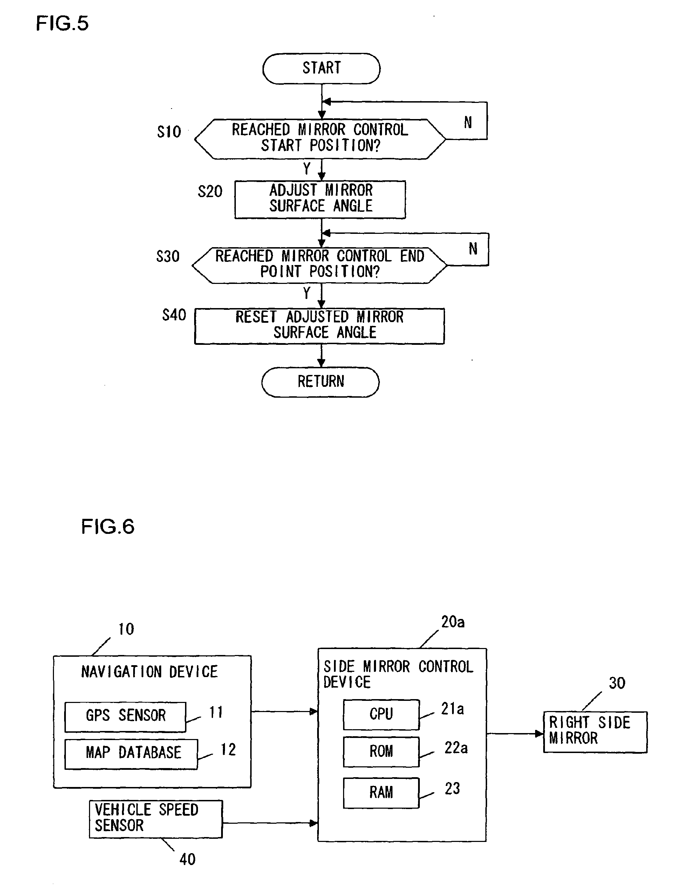

FIG. 5 presents a flowchart of the control executed by the vehicle situation monitoring apparatus in the first embodiment. The CPU 21 starts the processing in step S10 as an ignition switch (not shown) is turned on. In step S10, a decision is made as to whether or not the subject vehicle has reached the control start point based upon the current position of the subject vehicle detected with the GPS sensor 11 and the data indicating the control start point, which are stored in the ROM 22. If it is decided that the subject vehicle has not reached the control start point yet, the operation waits in standby in step S10. If, on the other hand, it is decided that the subject vehicle has reached the control start point, the CPU 21 judges that a merging point at which the yield line merges with another road is present ahead on the road on which the subject vehicle is currently traveling and, accordingly, the operation proceeds to step S20.

In step S20, the mirror surface angle of the right side mirror 30 is adjusted based upon the mirror surface angle stored in the ROM 22 in correspondence to the specific control start point that the subject vehicle has reached. For instance, if a mirror surface angle of 5° is indicated, the mirror surface of the right side mirror 30 is adjusted by 5° to the right. Once the mirror surface angle is adjusted, the operation proceeds to step S30.

In step S30, a decision is made as to whether or not the subject vehicle has reached the adjustment control end point based upon the current position of the subject vehicle detected with the GPS sensor 11 and the data indicating the control end point stored in the ROM 22. If it is decided that the subject vehicle has not reached the control end point yet, the operation waits in standby in step S30 for the subject vehicle to reach the control end point and once it is decided that the subject vehicle has reached the control end point, the operation proceeds to step S40. In step S40, the mirror surface angle having been adjusted in step S20 is reset, before the mirror surface angle adjustment processing ends.

The vehicle situation monitoring apparatus in the first embodiment makes a decision as to whether or not a merging point at which the current road merges with another road is present ahead of the road on which the subject vehicle is traveling and adjusts the mirror surface angle of the side mirror before the vehicle reaches the merging point if it is decided that such a merging point is present ahead. In particular, since the mirror surface angle of the side mirror is adjusted when the vehicle traveling on a yield line is about to merge into a right-of-way line, the driver is able to check for any vehicles traveling on the right-of-way line with ease with the side mirror. In addition, since the angle of the mirror surface is adjusted based upon the data indicating the control start point, the extent of the mirror surface angle adjustment and the like stored in the ROM 22 and the position of the subject vehicle detected with the GPS sensor 11, the cost of the entire apparatus can be minimized.

-Second Embodiment-

FIG. 6 shows the structure adopted in the vehicle situation monitoring apparatus in the second embodiment. In addition to the components of the vehicle situation monitoring apparatus achieved in the first embodiment shown in FIG. 1, the vehicle situation monitoring apparatus in the second embodiment includes a vehicle speed sensor 40 that detects the speed of the vehicle.

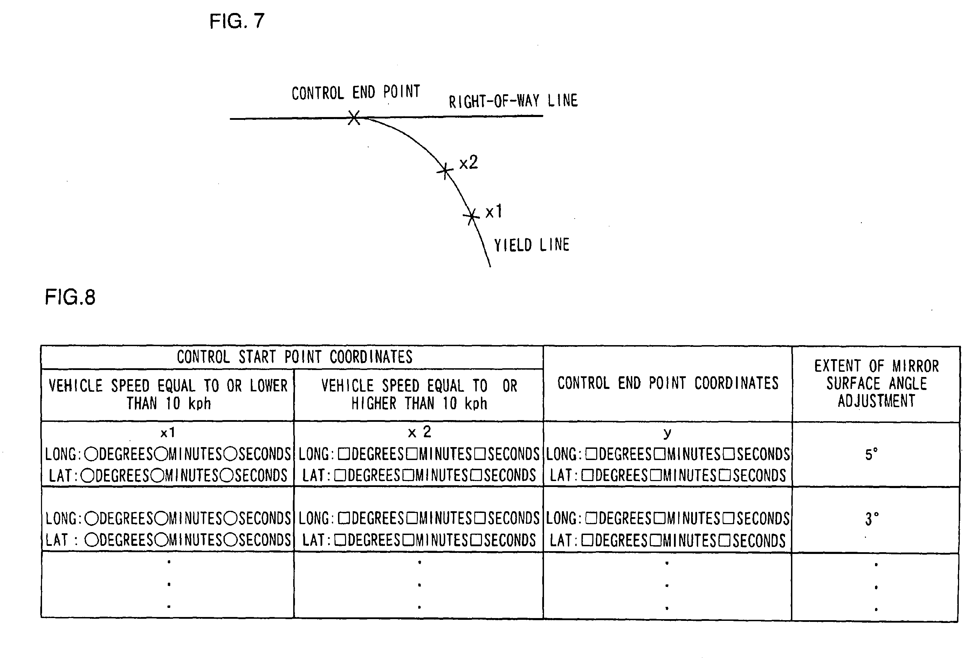

The vehicle situation monitoring apparatus in the second embodiment selects one of two mirror control start points in correspondence to the current vehicle speed. FIG. 7 shows the control start point selected when the vehicle speed is equal to or greater than a predetermined vehicle speed and another control start point that is selected when the vehicle speed is under the predetermined vehicle speed. In this example, the predetermined vehicle speed is 10 km/h, with x1 indicating the control start point selected when the vehicle speed is equal to or higher than 10 km/h and x2 indicating the control start point selected when the vehicle speed is lower than 10 km/h. Namely, the control start point x1 selected when the vehicle speed is equal to or higher than 10 km/h is set further from the merging point than the control start point x2 selected when the vehicle speed is lower than 10 km/h. This ensures that the mirror surface angle adjustment starts earlier when the vehicle speed is high compared to when the vehicle speed is low.

FIG. 8 shows data indicating control start points x1 selected when the vehicle speed is equal to or higher than 10 km/h, control start points x2 selected when the vehicle speed is lower than 10 km/h, control end points y and extents of surface angle adjustment. Data such as those shown in FIG. 8 are stored in a ROM 22a.

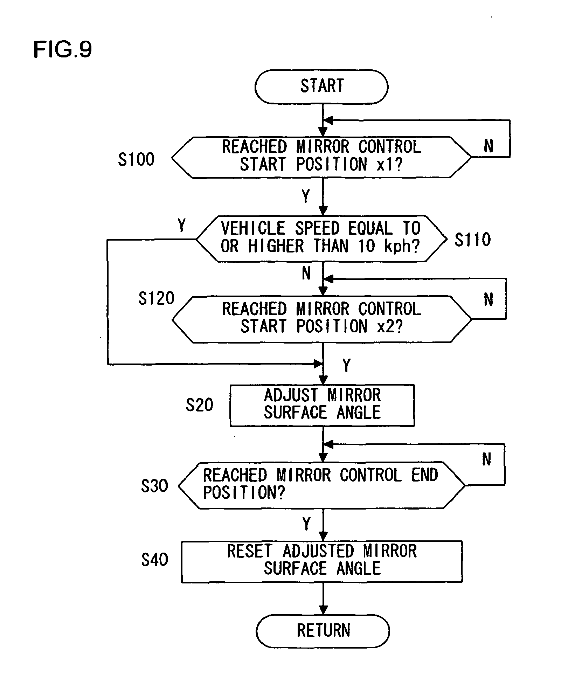

FIG. 9 presents a flowchart of the control executed by the vehicle situation monitoring apparatus in the second embodiment. As the ignition switch (not shown) is turned on, a CPU 21a of a side mirror control device 20a starts the processing in step S100. It is to be noted that the same step numbers are assigned to steps in the flowchart presented in FIG. 9 in which processing similar to that in the flowchart shown in FIG. 5 is executed, so as to preclude the necessity for a detailed explanation thereof.

In step S100, a decision is made as to whether or not the subject vehicle has reached the control start point x1 based upon the current position of the subject vehicle detected with the GPS sensor 11 and the data indicating the control start point x1, which are stored in the ROM 22a. If it is decided that the subject vehicle has not reached the control start point x1 yet, the operation waits in standby in step S100. If, on the other hand, it is decided that the subject vehicle has reached the control start point x1, it is judged that a merging point at which the current road merges with another road is present ahead on the road on which the subject vehicle is traveling and, accordingly, the operation proceeds to step S110.

In step S110, a decision is made as to whether or not the vehicle speed is equal to or higher than 10 km/h based upon the vehicle speed detected with the vehicle speed sensor 40. The operation proceeds to step S20 if the vehicle speed is determined to be equal to or higher than 10 km/h, whereas the operation proceeds to step S120 if the vehicle speed is determined to be lower than 10 km/h. In step S120, a decision is made as to whether or not the vehicle has reached the control start point x2. If it is decided that the vehicle has not reached the control start point x2 yet, the operation waits in standby in step S120, whereas the operation proceeds to step S20 if the vehicle is determined to have reached the control start point x2.

In step S20, the control for adjusting the mirror surface angle of the right side mirror 30 based upon the mirror surface angle stored in the ROM 22a in correspondence to the control start point x1 or x2 that the vehicle has reached is started. It is to be noted that since the processing executed in steps S20 through S40 is identical to the processing executed in steps S20 through S40 in the flowchart presented in FIG. 5, a detailed explanation is omitted.

When adjusting the mirror surface angle of the side mirror before the subject vehicle reaches a merging point, the vehicle situation monitoring apparatus in the second embodiment changes the mirror surface angle adjustment control start position in correspondence to the current speed of the vehicle. As a result, the mirror surface angle adjustment for the side mirror can be started at the optimal position in correspondence to the vehicle speed. Namely, since the mirror surface angle adjustment is started at a point further away from the merging point when the vehicle is traveling at a higher speed, the driver is able to check for vehicles traveling on the right-of-way line with the adjusted side mirror with a high degree of reliability.

-Third Embodiment-

The vehicle situation monitoring apparatus in the third embodiment determines the position at which the mirror surface angle control is started and the extent of the mirror surface angle adjustment based upon the radius R of the curve in the yield line merging into the right-of-way line. It is to be noted that the vehicle situation monitoring apparatus in the third embodiment adopts a structure identical to the structure of the vehicle situation monitoring apparatus in the first embodiment in FIG. 1. However, since the processing executed by the CPU of the side mirror control device in the third embodiment differs from the processing executed by the CPU 21 of the side mirror control device 20 in the first embodiment, the following explanation is given by using a reference numeral 21b for the CPU.

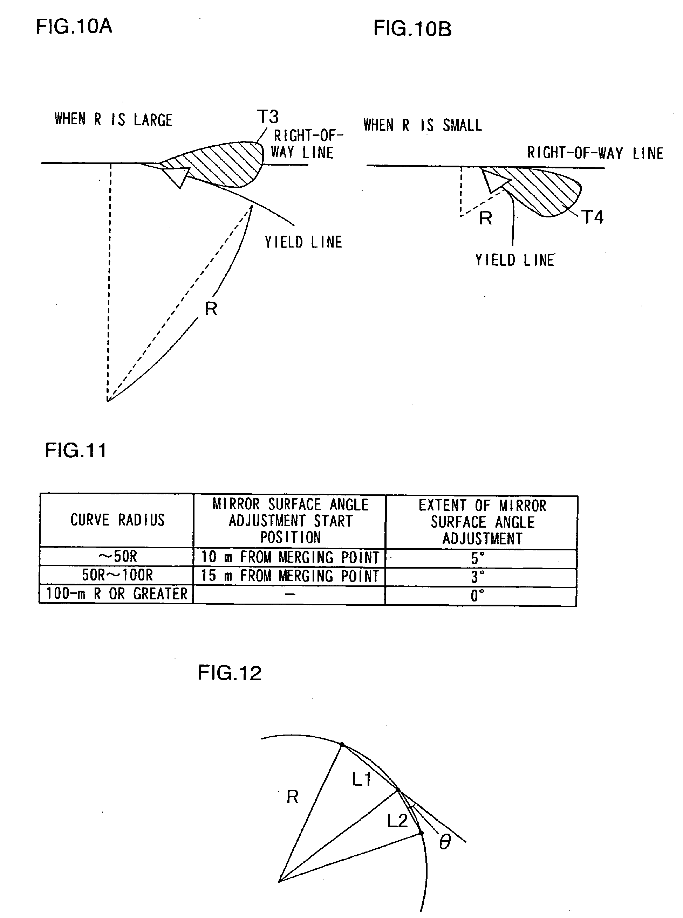

FIG. 10A shows a range T3 of the visual field of the right side mirror 30 when the radius R of the curve in the yield line is large, and FIG. 10B shows a range T4 of the visual field of the right side mirror 30 when the radius R of the curve in the yield line is small. The mirror surface angle is not adjusted either in FIG. 10A or FIG. 10B. If the curve radius R is large, vehicles traveling on the right-of-way line can be checked with the right side mirror 30 without having to adjust the mirror surface angle, as shown in FIG. 10A. However, if the curve radius R is small, vehicles traveling on the right-of-way line cannot be checked with the right side mirror 30, as shown in FIG. 10B.

The vehicle situation monitoring apparatus in the third embodiment adjusts the mirror surface angle of the right side mirror 30 in correspondence to the radius R of the curve in the yield line when the subject vehicle traveling on the yield line is merging into the right-of-way line.

FIG. 11 shows data indicating the radius R of the curve in the yield line, the position at which the mirror surface angle adjustment is started and the extent of the mirror surface angle adjustment. If the curve radius R is less than 50 m, the mirror surface is turned toward the right-of-way line by 5° when the current vehicle position is 10 m from the merging point. If the curve radius R is equal to or greater than 50 m and equal to or less than 100 m, the mirror surface is turned toward the right-of-way line by 3° when the current vehicle position is 15 m from the merging point. If the curve radius is greater than 100 m, the mirror surface angle is not adjusted.

The method adopted to calculate the curve radius R is now explained. The map data stored in the map database 12 of the navigation device 10 are constituted with nodes each indicating an intersection point or a specific point on a road and links each corresponding to a road portion between two nodes. When three nodes are present on a circular arc with a radius R and the distances between the individual nodes are L1(m) and L2 (m) as shown in FIG. 12, the angle $\theta$ in FIG. 12 is expressed as in (1) below.

$$\theta = 90 \ (L1 + L2) \ / \ (\Pi R) \qquad\qquad (1)$$

The angle $\theta$ can be calculated by using the cosine rule based upon the coordinates of the three nodes, and then, based upon the value of $\theta$ thus calculated and expression (1) , the curve radius R can be calculated. It is to be noted that the curve radius R is calculated in advance for each yield line merging into a right-of-way line and is stored in the ROM 22.

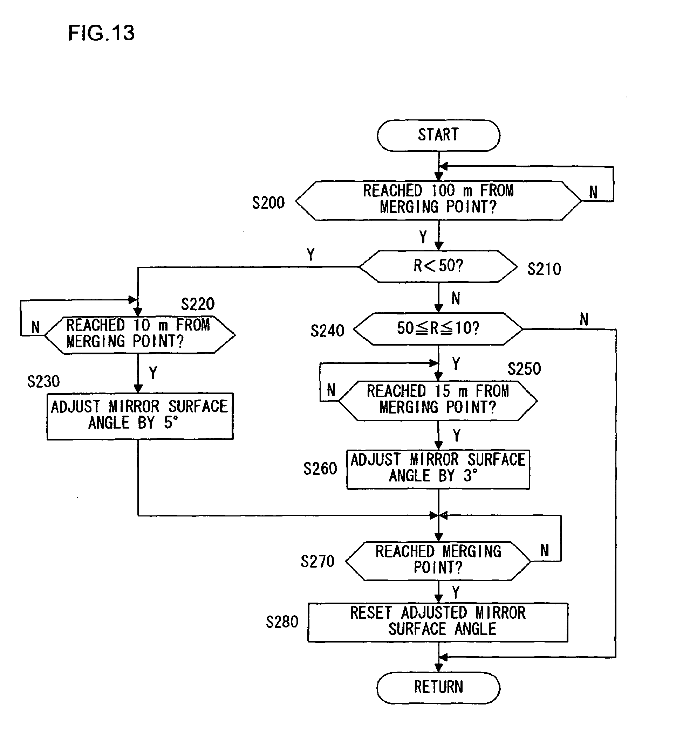

FIG. 13 presents a flowchart of the control executed by the vehicle situation monitoring apparatus in the third embodiment. As the ignition switch (not shown) is turned on, the CPU 21b starts the processing in step S200. In step S200, a decision is made as to whether or not the subject vehicle traveling on the yield line has reached a point 100 m from a merging point based upon the current vehicle position detected with the GSS sensor 11 and the map data stored in the map database 12. The operation proceeds to step S210 if the vehicle is determined to have reached the point 100 m from the merging point, whereas the operation waits in standby in step S200 if it is decided that the vehicle has not yet reached that point.

In step S210, the data indicating the radius R of the curve in the yield line at the merging point are read from the ROM 22 and a decision is made as to whether or not the curve radius R is less than 50 m. The operation proceeds to step S220 if the curve radius R is determined to be less than 50 m, whereas the operation proceeds to step S240 if the curve radius R is determined to be equal to or greater than 50 m.

If the curve radius R is less than 50 m, the control for adjusting the mirror surface angle of the right side mirror 30 at a point 10 m from the merging point, as indicated in FIG. 11, is started. Accordingly, in step S220, a decision is made as to whether or not the vehicle has reached a point 10 m from the merging point. If it is decided that the vehicle has not yet reached the point 10 m from the merging point, the operation waits in standby in step S220, whereas the operation proceeds to step S230 if the vehicle is determined to have reached the point 10 m from the merging point. In step S230, the mirror surface of the right side mirror 30 is turned toward the right-of-way line (to the right) by 5° and then the operation proceeds to step S270.

In step S240, a decision is made as to whether or not the radius R read from the ROM 22 in step S210 is equal to or greater than 50 m and equal to or less than 100 m. If the curve radius R is determined to be equal to or greater than 50 m and equal to or less than 100 m, the operation proceeds to step S250. However, if the curve radius is determined to be greater than 100 m, the mirror surface angle adjustment processing ends without adjusting the mirror surface angle.

If the curve radius R is equal to or greater than 50 m and equal to or less than 100 m, the control for adjusting the mirror surface of the right side mirror 30 at a point 15 m from the merging point, as indicated in FIG. 11 is started. Accordingly, a decision is made in step S250 as to whether or not the vehicle has reached a point 15 m from the merging point. If it is decided that the vehicle has not yet reached the point 15 m from the merging point, the operation waits in standby in step S250, whereas the operation proceeds to step S260 if the vehicle is determined to have reached the point 15 m from the merging point. In step S260, the mirror surface of the right side mirror 30 is turned toward the right-of-way line (to the right) by 3°, before the operation proceeds to step S270.

In step S270, a decision is made as to whether or not the vehicle has reached the merging point. The operation waits in standby in step S270 if it is decided that the vehicle has not reached the merging point yet, whereas the operation proceeds to step S280 if the vehicle is determined to have reached the merging point. In step S280, the mirror surface angle having been adjusted in step S230 or step S260 is reset, and then the mirror surface angle adjustment processing ends.

The vehicle situation monitoring apparatus in the third embodiment, which determines the mirror surface angle adjustment start point and the extent of mirror surface angle adjustment in correspondence to the radius of the curve R in the yield line merging into the right-of-way line, is capable of executing optimal mirror surface angle adjustment control in correspondence to the specific conditions at the merging point. Namely, the mirror surface angle is adjusted to a greater degree and the mirror surface angle adjustment is started at a point closer to the merging point when the radius R of the curve is smaller, and thus, the driver is able to check for any vehicles traveling on the right-of-way line with the side mirror with a high degree of reliability.

-Fourth Embodiment-

The vehicle situation monitoring apparatus in the third embodiment executes the mirror surface angle adjustment control when the vehicle traveling on a yield line is about to merge into a right-of-way line based upon the radius R of the curve in the yield line. The vehicle situation monitoring apparatus in the fourth embodiment executes the mirror surface angle adjustment control by taking into consideration the vehicle speed as well as the radius R of the curve in the yield line. It is to be noted that the structure of the vehicle situation monitoring apparatus in the fourth embodiment is identical to the structure of the vehicle situation monitoring apparatus in FIG. 6 in the second embodiment. However, the processing executed by its CPU is different, and for this reason, the following explanation is given by using reference numeral 21c for the CPU.

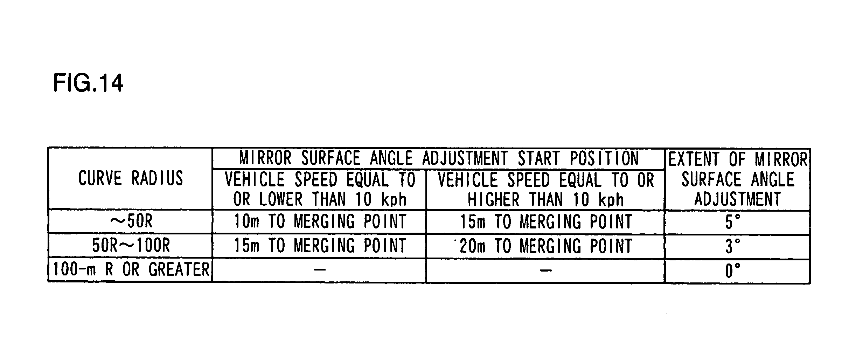

FIG. 14 shows the relationship among the radius R of the curve in the yield line, the mirror surface angle adjustment start position selected in correspondence to the vehicle speed and the extent of mirror surface angle adjustment. When the curve radius R is less than 50 m, the mirror surface angle adjustment processing is started at a point 10 m from the merging point if the vehicle speed is lower than 10 km/h, and the mirror surface angle adjustment processing is started at a point 15 m from the merging point if the vehicle speed is equal to or higher than 10 km/h. The mirror surface angle is adjusted by 5° under either set of circumstances.

When the curve radius R is equal to or greater than 50 m and equal to or less than 100 m, the mirror surface angle adjustment processing is started at a point 15 m from the merging point if the vehicle speed is lower than 10 km/h, and the mirror surface angle adjustment processing is started at a point 20 m from the merging point if the vehicle speed is equal to or higher than 10 km/h. The mirror surface angle is adjusted by 3° under either set of circumstances. In addition, the mirror surface angle is not adjusted if the curve radius R is greater than 100 m.

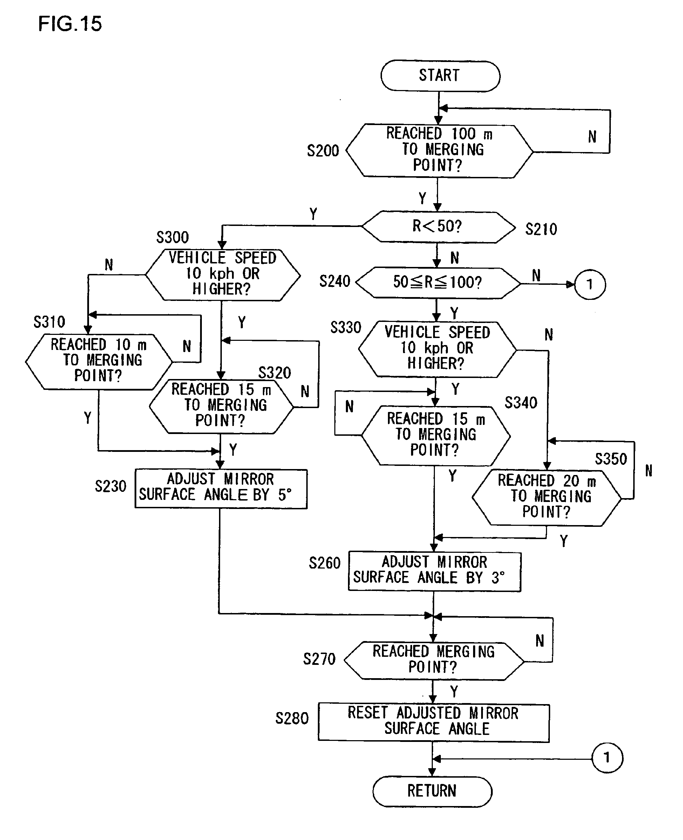

FIG. 15 presents a flowchart of the control executed by the vehicle situation monitoring apparatus in the fourth embodiment. The same step numbers are assigned to steps in the flowchart in FIG. 15 in which processing identical to that in the flowchart in FIG. 13 is executed to preclude the need for a detailed explanation thereof. The CPU 21c starts the processing in step S200 as the ignition switch (not shown) is turned on.

In step S200, a decision is made as to whether or not the vehicle has reached a point 100 m from the merging point. The operation proceeds to step S210 if the vehicle is determined to have reached the point 100 m from the merging point, whereas the operation waits in standby in step S200 if it is decided that the vehicle has not yet reached the point. In step S210, a decision is made as to whether or not the radius R of the curve in the yield line is less than 50 m. The operation proceeds to step S300 if the curve radius R is determined to be less than 50 m, whereas the operation proceeds to step S240 if it is determined to be equal to or greater than 50 m.

In step S300, a decision is made as to whether or not the vehicle speed detected with the vehicle speed sensor 40 is equal to or higher than 10 km/h. The operation proceeds to step S320 if the vehicle speed is determined to be equal to or higher than 10 km/h, whereas the operation proceeds to step S310 if the vehicle speed is determined to be lower than 10 km/h. In step S310, a decision is made as to whether or not the vehicle has reached a point 10 m from the merging point. If it is decided that the vehicle has not reached the point 10 m from the merging point yet, the operation waits in standby in step S310 whereas the operation proceeds to step S230 if the vehicle is determined to have reached the point 10 m from the merging point.

In step S320, a decision is made as to whether or not the vehicle has reached a point 15 m from the merging point. The operation waits in standby in step S320 if it is decided that the vehicle has not reached a point 15 m from the merging point yet, whereas the operation proceeds to step S230 if the vehicle is judged to have reached a point 15 m from the merging point. In step S230, the mirror surface of the right side mirror 30 is turned toward the right-of-way line (to the right) by 5°, and then the operation proceeds to step S270.

In step S240, a decision is made as to whether or not the curve radius R is equal to or greater than 50 m and equal to or less than 100 m. The operation proceeds to step S330 if the curve radius R is determined to be equal to or greater than 50 m and equal to or less than 100 m, whereas the mirror surface angle adjustment processing ends without adjusting the mirror surface angle if the curve radius R is determined to be greater than 100 m. In step S330, a decision is made as to whether or not the vehicle speed detected with the vehicle speed sensor 40 is equal to or higher than 10 km/h. The operation proceeds to step S340 if the vehicle speed is determined to be equal to or higher than 10 km/h, whereas the operation proceeds to step S350 if the vehicle speed is judged to be lower than 10 km/h.

In step S340, a decision is made as to whether or not the vehicle has reached a point 15 m from the merging point. The operation waits in standby in step S340 if it is decided that the vehicle has not reached a point 15 m from the merging point yet, whereas the operation proceeds to step S260 if the vehicle is judged to have reached a point 15 m from the merging point. In step S350, on the other hand, a decision is made as to whether or not the vehicle has reached a point 20 m from the merging point. The operation waits in standby in step S350 if it is decided that the vehicle has not reached a point 20 m from the merging point yet, whereas the operation proceeds to step S260 if the vehicle is judged to have reached a point 20 m from the merging point.

In step S260, the mirror surface of the right side mirror 30 is turned toward the right-of-way line (to the right) by 3°, and then the operation proceeds to in step S270. Since the processing executed in steps S270 and S280 is identical to the processing executed in steps S270 and S280 in the flowchart presented in FIG. 13, a detailed explanation is not provided.

The vehicle situation monitoring apparatus in the fourth embodiment, which determines the mirror surface angle adjustment start position and the extent of the mirror surface angle adjustment based upon the radius of the curve in the yield line and the current vehicle speed, is capable of executing even better mirror surface angle adjustment control when the vehicle traveling on a yield line merges into a right-of-way line.

-Fifth Embodiment-

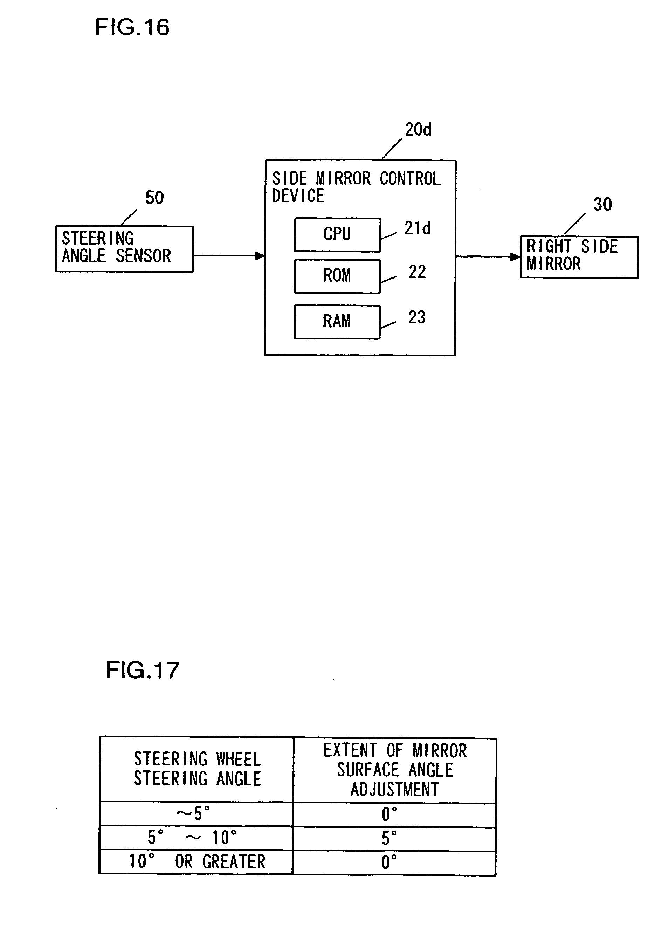

FIG. 16 shows the structure adopted in the fifth embodiment of the vehicle situation monitoring apparatus. The vehicle situation monitoring apparatus in the fifth embodiment includes a side mirror control device 20d and a steering angle sensor 50. The steering angle sensor 50 detects the steering angle at the steering wheel.

FIG. 17 shows the relationship between the steering angle and the extent of the mirror surface angle adjustment at the right side mirror 30. As indicated in FIG. 17, when the steering angle is equal to or greater than 5° and is equal to or less than 10°, the mirror surface angle of the right side mirror 30 is adjusted a 5°, whereas the mirror surface angle is not adjusted at all if the steering wheel steering angle is less than 5° or greater than 10°. Namely, if the steering angle is equal to or greater than 5° and equal to or less than 10°, it is judged that the vehicle traveling on a yield line is about to merge into a right-of-way line and, accordingly, the mirror surface angle is adjusted. If, on the other hand, the steering angle is greater than 10°, it is judged that the vehicle is being parked or the like, and accordingly, the mirror surface angle is not adjusted. In addition, if the steering angle is less than 5°, it is judged that the driver of the subject vehicle merging into a right-of-way line can check for any vehicle traveling on the right-of-way line with the side mirror without adjusting the mirror surface angle and thus, the mirror surface angle is not adjusted.

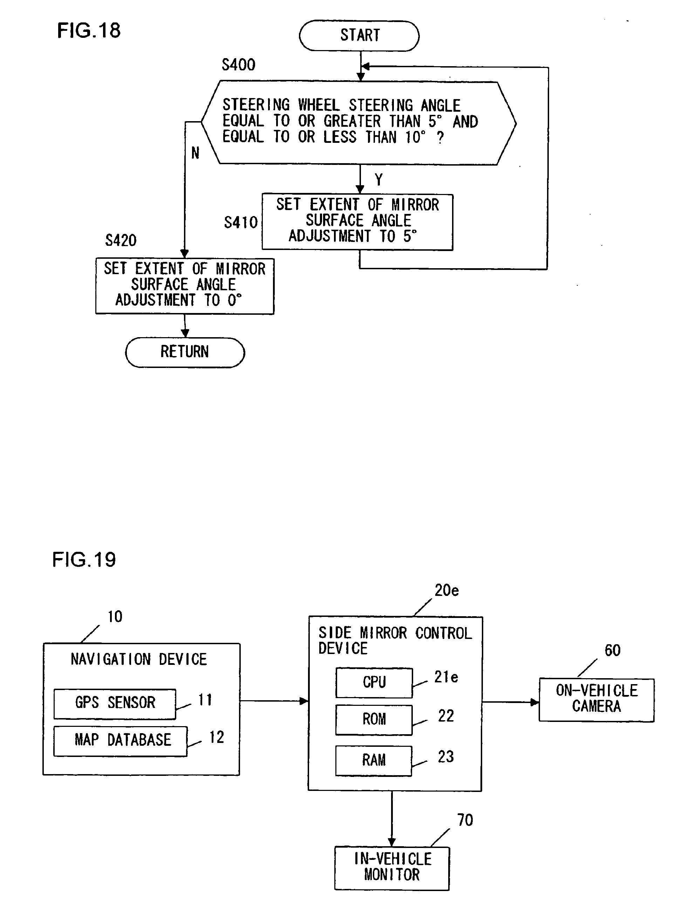

FIG. 18 presents a flowchart of the control executed by the vehicle situation monitoring apparatus in the fifth embodiment. The processing in step S400 is started by a CPU 21d of the side mirror control device 20d as the ignition switch (not shown) is turned on. In step S400, a decision is made as to whether or not the steering angle detected with the steering angle sensor 50 is equal to or greater than 5° and equal to or less than 10°. The operation proceeds to step S410 if the steering angle is determined to be equal to or greater than 5° and equal to or less than 10°, otherwise the operation proceeds to step S420.

In step S410, the mirror surface of the right side mirror 30 is turned toward the right-of-way line (to the right) by 5°, before the operation returns to step S400. In step S420, on the other hand, the extent of the mirror surface angle adjustment is set to 0° for the right side mirror 30. Namely, if the mirror surface angle has been adjusted in step S410, the mirror surface angle is reset to the initial pre-adjustment setting in step S420, whereas if the mirror surface angle has not been adjusted, the initial mirror surface angle remains unchanged in step S420.

The vehicle situation monitoring apparatus in the fifth embodiment makes a decision as to whether or not the vehicle is about to merge into a right-of-way line based on the steering angle of the steering wheel and adjusts the mirror surface angle of the side mirror if it is decided that the vehicle is about to merge into a right-of-way line. Thus, mirror surface angle adjustment control is achieved by adopting a simple structure.

The present invention is not limited to the embodiments described above. In each of the embodiments explained above, the mirror surface angle of a side mirror of the subject vehicle is adjusted as the vehicle traveling on a yield line approaches a merging point. If the vehicle is equipped with a system that includes an on-vehicle camera capable of photographing the area surrounding the vehicle, the on-vehicle camera may be turned toward the right-of-way line as the vehicle traveling on the yield line approaches the merging point. FIG. 19 shows the structure of a vehicle situation monitoring apparatus equipped with an on-vehicle camera 60. This vehicle situation monitoring apparatus enables the driver to check the image obtained with the on-vehicle camera 60 on a monitor 70 installed in the vehicle. Namely, before the vehicle reaches the merging point, the driver is able to check for any vehicle traveling on the right-of-way line on the in-vehicle monitor 70. Instead of the right side mirror used in the second through fifth embodiments, an on-vehicle camera 60 may be similarly mounted and control may be executed to set the direction along which an image is photographed with the on-vehicle camera 60 toward the right-of-way line as the vehicle traveling on the yield line approaches the merging point.

In the embodiments explained above, the mirror surface angle is adjusted when the vehicle traveling on a yield line approaches a merging point and the mirror surface angle is reset to the pre-adjustment state when the vehicle reaches the control end point or the merging point. Instead, the mirror surface angle may be controlled so that the extent of the mirror surface angle adjustment is gradually reset to 0° until the vehicle travels to the control end point.

While the vehicle situation monitoring apparatus in the third embodiment determines the mirror surface angle adjustment start position and the extent of the mirror surface angle adjustment based upon the radius R of the curve in the yield line merging into the right-of-way line, the mirror surface angle adjustment start position and the extent of the mirror surface angle adjustment may instead be determined based upon the steering angle at the steering wheel.

Since the vehicle traveling on the yield line merges into the right-of-way line from the left side of the right-of-way line, the mirror surface angle of the right side mirror is turned to the right in the explanation given in reference to the embodiments. If, on the other hand, the vehicle is merging into the right-of-way line from the right side, the mirror surface angle of a left side mirror may be turned to the left. In addition, the mirror surface angle of a mirror other than a side mirror, e.g. , the mirror surface angle of a rearview mirror in the cabin, may be adjusted instead.

The position of the subject vehicle may be detected through self-contained navigation executed by using a gyro sensor (not shown) and the vehicle speed sensor, instead of satellite navigation. In addition, the proximity of the subject vehicle to the merging point may be detected by mounting a camera at the vehicle and executing white line recognition processing on the image captured with the on-vehicle camera. Furthermore, the mirror surface angle adjustment start position and the extent of angle adjustment may be custom set for each driver.

While the vehicle situation monitoring apparatus in the fifth embodiment adjusts the mirror surface angle of the side mirror in correspondence to the steering angle at the steering wheel, a decision may be made as to whether or not a merging point is present ahead on the road on which the subject vehicle is currently traveling and the mirror surface angle may be adjusted if it is decided that a merging point is present ahead and the steering angle at the steering wheel is within a predetermined range.

**Claims**

1.  A vehicle situation monitoring apparatus comprising:

    merging point decision-making means (10,20) for making a decision as to whether or not a merging point of a road on which a subject vehicle is traveling and another road is present a head on the road on which the subject vehicle is traveling; and
    control means (20) for adjusting the angle of vehicle situation checking means (30; 60) with which the driver is able to visually check the traffic situation if the merging point decision-making means (10,20) determines that a merging point is present.

2. A vehicle situation monitoring apparatus according to claim 1, further comprising:

yield line traveling decision-making means (10,20) for making a decision as to whether or not the vehicle is traveling on a yield line merging into a right-of-way line which is a priority road, wherein:
if the merging point decision-making means (10,20) determines that a merging point is present and the yield line traveling decision-making means (10,20) determines that the vehicle is traveling on a yield line, the control means (20) controls the angle of the vehicle situation checking means (30;60) so as to enable the driver to check for traveling objects traveling on the right-of-way line.

3. A vehicle situation monitoring apparatus according to claim 1, further comprising:

position detection means (11) for detecting a current position of the vehicle; and
control start position storage means (22) for storing a plurality of control start positions in correspondence to each merging point; wherein:
when the vehicle position detected by the position detection means (11) and a control start position stored in the control start position storage means (22) match each other, the control means (20) starts implementing control of the angle of the vehicle situation checking means (30;60).

4. A vehicle situation monitoring apparatus according to claim 1, further comprising:

position detection means (11) for detecting a current position of the vehicle; and
control end position storage means (22) for storing a plurality of control end positions correspondence to each merging point; wherein:
when the vehicle position detected by the position detection means (11) and a control end position stored in the control end position storage means (22) match each other, the control means (20) starts implementing control for resetting the angle of the vehicle situation checking means (30,60) to an initial pre-control start angle.

5. A vehicle situation monitoring apparatus according to claim 1, further comprising:

position detection means (11) for detecting a current position of the vehicle; and
angle adjustment storage means (22) for storing a plurality of sets of data indicating angles of the vehicle situation checking means (30;60) in correspondence to each merging point; wherein:
the control means (20) adjusts the angle of the vehicle situation checking means (30;60) based upon the vehicle position detected by the vehicle position detection means (11) and the plurality of sets of data stored in the angle adjustment storage means (22).

6. A vehicle situation monitoring apparatus according to claim 1, further comprising:

vehicle speed detection means (40) for detecting the speed of the vehicle; wherein:
the control means (20) starts control for adjusting the angle of the vehicle situation checking means (30;60) at a position further away from the merging point when the vehicle speed detected by the vehicle speed detection means (40) is higher.

7. A vehicle situation monitoring apparatus according to claim 1, wherein:

the control means (20) determines the angle of the vehicle situation checking means (30; 60) based upon a radius of a curve in the road on which the subject vehicle is traveling.

8. A vehicle situation monitoring apparatus according to claim 7, wherein:

the control means (20) adjusts the angle of the vehicle situation checking means (30; 60) to a greater extent when the radius of the curve in the road on which the subject vehicle is traveling is smaller.

9. A vehicle situation monitoring apparatus according to claim 7, wherein:

the control means (20) does not adjust the angle of the vehicle situation checking means (30; 60) if the radius of the curve in the road on which the subject vehicle is traveling is equal to or greater than a predetermined value.

10. A vehicle situation monitoring apparatus according to claim 1, wherein:

the control means (20) determines a control start position at which the control means (20) starts control for adjusting the angle of the vehicle situation checking means (30;60) based upon a radius of a curve in the road on which the subject vehicle is traveling.

11. A vehicle situation monitoring apparatus according to claim 10, wherein:

the control means (20) starts the control for adjusting the angle of the vehicle situation checking means (30; 60) at a position closer to the merging point when the radius of the curve in the road on which the subject vehicle is traveling is smaller.

12. A vehicle situation monitoring apparatus according to claim 1, further comprising:

a vehicle speed detection means (40) for detecting the speed of the vehicle; wherein:
the control means (20) determines the angle of the vehicle situation checking means (30; 60) based upon a radius of a curve of the road on which the subject vehicle is traveling and the vehicle speed detected by the vehicle speed detection means (40).

13. A vehicle situation monitoring apparatus according to claim 1, further comprising:

vehicle speed detection means (40) for detecting the speed of the vehicle; wherein:
the control means (20) determines a control start position at which the control means (20) starts control for adjusting the angle of the vehicle situation checking means (30;60) based upon a radius of a curve of the road on which the subject vehicle is traveling and the vehicle speed detected by the vehicle speed detection means (40).

14. A vehicle situation monitoring apparatus according to claim 1, further comprising:

steering angle detection means (50) for detecting a steering wheel steering angle; wherein:
the control means (20) determines the angle of the vehicle situation checking means (30;60) based upon the steering angle detected by the steering angle detection means (50).

15. A vehicle situation monitoring apparatus according to claim 1, further comprising:

steering angle detection means (50) for detecting a steering wheel steering angle; wherein:
the control means (20) determines a control start position at which the control means (20) starts control for adjusting the angle of the vehicle situation checking means (30;60) based upon the steering angle detected by the steering angle detection means (50).

16. A vehicle situation monitoring apparatus according to claim 1, further comprising:

steering angle detection means (50) for detecting a steering wheel steering angle; wherein:
the merging point decision-making means (10,20) determines that a merging point is present ahead on the road on which the subject vehicle is traveling if the steering angle detected by the steering angle detection means (50) is within a predetermined angle range.

17. A vehicle situation monitoring apparatus according to claim 1, wherein:

the vehicle situation checking means is constituted by a mirror surface of a side mirror (30).

18. A vehicle situation monitoring apparatus according to claim 1, wherein:

the vehicle situation checking means is an image-capturing means (60) for capturing an image in an area surrounding the vehicle;

the vehicle situation monitoring apparatus further includes a display means (70) for displaying the image captured by the image-capturing means (60); and

if the merging point decision-making means (10,20) determines that a merging point is present, the control means (20) sets an image-capturing direction along which the image-capturing means (60) captures the image toward the other road merging at the merging point.

19. A vehicle situation monitoring method comprising:

making a decision as to whether or not a merging point of a road on which a subject vehicle is traveling and another road is present ahead on the road on which the subject vehicle is traveling; and

adjusting the angle of vehicle situation checking means (30; 60) with which the driver is able to visually check the traffic situation if a merging point is determined to be present.

**Patentansprüche**

1. Vorrichtung zur Überwachung der Lage eines Fahrzeugs, die Folgendes umfasst:

Knotenpunkt-Entscheidungsmittel (10, 20) zum Treffen einer Entscheidung in Bezug darauf, ob ein Knotenpunkt einer Straße, auf der ein gegenständliches Fahrzeug fährt, und einer weiteren Straße weiter vom auf der Straße, auf der das gegenständliche Fahrzeug fährt, vorhanden ist; und

Steuermittel (20) zum Einstellen des Winkels eines Fahrzeuglagekontrollmittels (30, 60), mit dem der Fahrer die Verkehrslage optisch kontrollieren kann, wenn das Knotenpunkt-Entscheidungsmittel (10, 20) ermittelt, dass ein Knotenpunkt vorhanden ist.

2. Vorrichtung zur Überwachung der Lage eines Fahrzeugs nach Anspruch 1, die ferner Folgendes umfasst:

Entscheidungsmittel für die Fahrt auf Vorfahrt-gewähren-Strecken (10, 20) zum Treffen einer Entscheidung in Bezug darauf, ob das Fahrzeug auf einer Vorfahrt-gewähren-Strecke fährt, die in eine Vorfahrtsstrecke einmündet, die eine Vorfahrtsstraße ist, wobei:

wenn das Knotenpunkt-Entscheidungsmittel (10, 20) ermittelt, dass ein Knotenpunkt vorhanden ist, und das Entscheidungsmittel für die Fahrt auf Vorfahrt-gewähren-Strecken (10, 20) ermittelt, dass das Fahrzeug auf einer Vorfahrt-gewähren-Strecke fährt, steuert das Steuermittel (20) den Winkel des Fahrzeuglagekontrollmittels (30; 60), um den Fahrer zu befähigen zu kontrollieren, ob auf der Vorfahrtsstrecke fahrende Objekte fahren.

3. Vorrichtung zur Überwachung der Lage eines Fahrzeugs nach Anspruch 1, die ferner Folgendes umfasst:

Positionserkennungsmittel (11) zum Erkennen einer aktuellen Position des Fahrzeugs; und Steuerungsanfangspositionsspeichermittel (22) zum Speichern einer Mehrzahl von Steuerungsanfangspositionen entsprechend jedem Knotenpunkt; wobei:

wenn die vom Positionserkennungsmittel (11) erkannte Fahrzeugposition und eine im Steuerungsanfangspositionsspeichermittel (22) gespeicherte Steuerungsanfangsposition miteinander übereinstimmen, beginnt das Steuermittel (20) die Steuerung des Winkels des Fahrzeuglagekontrollmittels (30; 60) zu implementieren.

4. Vorrichtung zur Überwachung der Lage eines Fahrzeugs nach Anspruch 1, die ferner Folgendes umfasst:

Positionserkennungsmittel (11) zum Erkennen einer aktuellen Position des Fahrzeugs; und Steuerungsendepositionsspeichermittel (22) zum Speichern einer Mehrzahl von Steuerungsendepositionen entsprechend jedem Knotenpunkt; wobei:

wenn die vom Positionserkennungsmittel (11) erkannte Fahrzeugposition und eine im Steuerungsendepositionsspeichermittel (22) gespeicherte Steuerungsendeposition miteinander übereinstimmen, beginnt das Steuermittel (20) die Steuerung für das Rücksetzen des Winkels des Fahrzeuglagekontrollmittels (30; 60) auf einen Ausgangswinkel vor Steuerungsanfang zu implementieren.

5. Vorrichtung zur Überwachung der Lage eines Fahrzeugs nach Anspruch 1, die ferner Folgendes umfasst:

   Positionserkennungsmittel (11) zum Erkennen einer aktuellen Position des Fahrzeugs; und Winkeleinstellungsspeichermittel (22) zum Speichern einer Mehrzahl von Datensätzen, die Winkel des Fahrzeuglagekontrollmittels (30; 60) entsprechend jedem Knotenpunkt anzeigen; wobei das Steuermittel (20) den Winkel des Fahrzeuglagekontrollmittels (30; 60) auf der Basis der vom Fahrzeugpositionserkennungsmittel (11) erkannten Fahrzeugposition und der Mehrzahl von im Winkeleinstellungsspeichermittel (22) gespeicherten Datensätzen einstellt.

6. Vorrichtung zur Überwachung der Lage eines Fahrzeugs nach Anspruch 1, die ferner Folgendes umfasst:

   Fahrzeuggeschwindigkeitserkennungsmittel (40) zum Erkennen der Geschwindigkeit des Fahrzeugs; wobei das Steuermittel (20) die Steuerung zum Einstellen des Winkels des Fahrzeuglagekontrollmittels (30; 60) an einer vom Knotenpunkt weiter entfernten Position beginnt, wenn die vom Fahrzeuggeschwindigkeitserkennungsmittel (40) erkannte Fahrzeuggeschwindigkeit höher ist.

7. Vorrichtung zur Überwachung der Lage eines Fahrzeugs nach Anspruch 1, bei der das Steuermittel (20) den Winkel des Fahrzeuglagekontrollmittels (30; 60) auf der Basis eines Radius einer Kurve in der Straße, auf der das gegenständliche Fahrzeug fährt, ermittelt.

8. Vorrichtung zur Überwachung der Lage eines Fahrzeugs nach Anspruch 7, bei der das Steuermittel (20) den Winkel des Fahrzeuglagekontrollmittels (30; 60) in einem größeren Maße verstellt, wenn der Radius der Kurve in der Straße, auf der das gegenständliche Fahrzeug fährt, kleiner ist.

9. Vorrichtung zur Überwachung der Lage eines Fahrzeugs nach Anspruch 7, bei der das Steuermittel (20) den Winkel des Fahrzeuglagekontrollmittels (30; 60) nicht verstellt, wenn der Radius der Kurve in der Straße, auf der das gegenständliche Fahrzeug fährt, gleich einem vorbestimmten Wert oder größer als dieser ist.

10. Vorrichtung zur Überwachung der Lage eines Fahrzeugs nach Anspruch 1, bei der das Steuermittel (20) eine Steuerungsanfangsposition ermittelt, an der das Steuermittel (20) die Steuerung zum Einstellen des Winkels des Fahrzeuglagekontrollmittels (30; 60) auf der Basis eines Radius einer Kurve in der Straße, auf der das gegenständliche Fahrzeug fährt, beginnt.

11. Vorrichtung zur Überwachung der Lage eines Fahrzeugs nach Anspruch 1, bei der das Steuermittel (20) beginnt, die Steuerung zum Einstellen des Winkels des Fahrzeuglagekontrollmittels (30; 60) an einer Position näher am Knotenpunkt beginnt, wenn der Radius der Kurve in der Straße, auf der das gegenständliche Fahrzeug fährt, kleiner ist.

12. Vorrichtung zur Überwachung der Lage eines Fahrzeugs nach Anspruch 1, die ferner Folgendes umfasst:

   ein Fahrzeuggeschwindigkeitserkennungsmittel (40) zum Erkennen der Geschwindigkeit des Fahrzeugs, wobei das Steuermittel (20) den Winkel des Fahrzeuglagekontrollmittels (30; 60) auf der Basis eines Radius einer Kurve der Straße, auf der das gegenständliche Fahrzeug fährt, und der vom Fahrzeuggeschwindigkeitserkennungsmittel (40) erkannten Fahrzeuggeschwindigkeit ermittelt.

13. Vorrichtung zur Überwachung der Lage eines Fahrzeugs nach Anspruch 1, die ferner Folgendes umfasst:

   ein Fahrzeuggeschwindigkeitserkennungsmittel (40) zum Erkennen der Geschwindigkeit des Fahrzeugs, wobei das Steuermittel (20) eine Steuerungsanfangsposition ermittelt, an der das Steuermittel (20) die Steuerung zum Einstellen des Winkels des Fahrzeuglagekontrollmittels (30; 60) auf der Basis eines Radius einer Kurve der Straße, auf der das gegenständliche Fahrzeug fährt, und der vom Fahrzeuggeschwindigkeitserkennungsmittel (40) erkannten Fahrzeuggeschwindigkeit beginnt.

14. Vorrichtung zur Überwachung der Lage eines Fahrzeugs nach Anspruch 1, die ferner Folgendes umfasst:

   Lenkwinkelerkennungsmittel (50) zum Erkennen eines Lenkradlenkwinkels; wobei das Steuermittel (20) den Winkel des Fahrzeuglagekontrollmittels (30; 60) auf der Basis des vom Lenkwinkelerkennungsmittel (50) erkannten Lenkwinkels ermittelt.

**15.** Vorrichtung zur Überwachung der Lage eines Fahrzeugs nach Anspruch 1, die ferner Folgendes umfasst:

Lenkwinkelerkennungsmittel (50) zum Erkennen eines Lenkradlenkwinkels; wobei
das Steuermittel (20) eine Steuerungsanfangsposition ermittelt, an der das Steuermittel (20) die Steuerung zum Einstellen des Winkels des Fahrzeuglagekontrollmittels (30; 60) auf der Basis des vom Lenkwinkelerkennungsmittel (50) erkannten Lenkwinkels beginnt.

**16.** Vorrichtung zur Überwachung der Lage eines Fahrzeugs nach Anspruch 1, die ferner Folgendes umfasst:

Lenkwinkelerkennungsmittel (50) zum Erkennen eines Lenkradlenkwinkels; wobei
das Knotenpunkt-Entscheidungsmittel (10, 20) ermittelt, dass weiter vom auf der Straße, auf der das gegenständliche Fahrzeug fährt, ein Knotenpunkt vorhanden ist, wenn der vom Lenkwinkelerkennungsmittel (50) erkannte Lenkwinkel innerhalb eines vorbestimmten Winkelbereichs liegt.

**17.** Vorrichtung zur Überwachung der Lage eines Fahrzeugs nach Anspruch 1, bei der
das Fahrzeuglagekontrollmittel von einer Spiegeloberfläche eines Außenspiegels (30) gebildet wird.

**18.** Vorrichtung zur Überwachung der Lage eines Fahrzeugs nach Anspruch 1, bei der
das Fahrzeuglagekontrollmittel ein Bilderfassungsmittel (60) zum Erfassen eines Bildes in einem das Fahrzeug umgebenden Bereich ist;
die Vorrichtung zur Überwachung der Lage eines Fahrzeugs ferner ein Anzeigemittel (70) zum Anzeigen des vom Bilderfassungsmittel (60) erfassten Bildes aufweist und
das Steuermittel (20), wenn das Knotenpunkt-Entscheidungsmittel (10, 20) ermittelt, dass ein Knotenpunkt vorhanden ist, eine Bilderfassungsrichtung einstellt, an der entlang das Bilderfassungsmittel (60) das Bild in Richtung auf die andere Straße, die am Knotenpunkt einmündet, erfasst.

**19.** Verfahren zur Überwachung der Lage eines Fahrzeugs, das Folgendes umfasst:

Treffen einer Entscheidung in Bezug darauf, ob ein Knotenpunkt einer Straße, auf der ein gegenständliches Fahrzeug fährt, und einer weiteren Straße weiter vom auf der Straße, auf der das gegenständliche Fahrzeug fährt, vorhanden ist oder nicht; und
Einstellen des Winkels des Fahrzeuglagekontrollmittels (30; 60), mit dem der Fahrer die Verkehrslage optisch kontrollieren kann, wenn ermittelt wurde, dass ein Knotenpunkt vorhanden ist.

**Revendications**

**1.** Appareil de surveillance de la condition d'un véhicule comprenant:

des moyens de prise de décision concernant le point de convergence (10, 20) destinés à décider si un point de convergence d'une route sur laquelle roule le véhicule en question et d'une autre route est présent ou non plus avant sur la route sur laquelle le véhicule en question roule; et
des moyens de commande (20) destinés à régler l'angle des moyens de vérification de la condition d'un véhicule (30; 60) avec lesquels le conducteur est capable de vérifier visuellement l'état de la circulation si les moyens de prise de décision concernant le point de convergence (10, 20) déterminent qu'un point de convergence est présent.

**2.** Appareil de surveillance de la condition d'un véhicule selon la revendication 1, comprenant en outre:

des moyens de prise de décision concernant le déplacement sur une voie de priorité (10, 20) destinés à décider si le véhicule roule ou non sur une voie de priorité convergeant en une voie de droit de passage qui est une route prioritaire, dans lequel:

si les moyens de prise de décision concernant le point de convergence (10, 20) déterminent qu'un point de convergence est présent et les moyens de prise de décision concernant une voie de priorité (10, 20) déterminent que le véhicule roule sur une voie de priorité, les moyens de commande (20) commandent l'angle des moyens de vérification de la condition d'un véhicule (30; 60) de manière à permettre au conducteur de vérifier la venue d'objets roulants sur la voie de droit de passage.

3. Appareil de surveillance de la condition d'un véhicule selon la revendication 1, comprenant en outre:

des moyens de détection de position (11) destinés à détecter une position actuelle du véhicule; et
des moyens de stockage de position de départ de commande (22) destinés à stocker une pluralité de positions de départ de commande correspondant à chaque point de convergence; dans lequel:

lorsque la position du véhicule détectée par les moyens de détection de position (11) et une position de départ de commande stockée dans les moyens de stockage de position de départ de commande (22) correspondent l'une à l'autre, les moyens de commande (20) commencent l'actionnement de la commande de l'angle des moyens de vérification de la condition d'un véhicule (30; 60).

4. Appareil de surveillance de la condition d'un véhicule selon la revendication 1, comprenant en outre:

des moyens de détection de position (11) destinés à détecter une position actuelle du véhicule; et
des moyens de stockage de position terminale de commande (22) destinés à stocker une pluralité de positions terminales de commande correspondant à chaque point de convergence; dans lequel:

lorsque la position du véhicule détectée par les moyens de détection de position (11) et une position terminale de commande stockée dans les moyens de stockage de position terminale de commande (22) correspondent l'une à l'autre, les moyens de commande (20) commencent à actionner la commande pour régler de nouveau l'angle des moyens de vérification de la condition d'un véhicule (30, 60) à un angle de départ de précommande initial.

5. Appareil de surveillance de la condition d'un véhicule selon la revendication 1, comprenant en outre:

des moyens de détection de position (11) destinés à détecter une position actuelle du véhicule; et
des moyens de stockage de réglage d'angle (22) destinés à stocker une pluralité de groupes de données indiquant les angles des moyens de vérification de la condition d'un véhicule (30; 60) correspondant à chaque point de convergence; dans lequel:

les moyens de commande (20) règlent l'angle des moyens de vérification de la condition d'un véhicule (30; 60) sur la base de la position du véhicule détectée par les moyens de détection de position (11) du véhicule et de la pluralité de groupes de données stockée dans les moyens de stockage de réglage d'angle (22).

6. Appareil de surveillance de la condition d'un véhicule selon la revendication 1, comprenant en outre:

des moyens de détection de la vitesse d'un véhicule (40) destinés à détecter la vitesse du véhicule; dans lequel:

les moyens de commande (20) commencent la commande pour régler l'angle des moyens de vérification de la condition d'un véhicule (30; 60) à une position plus éloignée du point de convergence lorsque la vitesse du véhicule détectée par les moyens de détection de la vitesse d'un véhicule (40) est supérieure.

7. Appareil de surveillance de la condition d'un véhicule selon la revendication 1, dans lequel:

les moyens de commande (20) déterminent l'angle des moyens de vérification de la condition d'un véhicule (30; 60) sur la base d'un rayon d'une courbe de la route sur laquelle le véhicule en question roule.

8. Appareil de surveillance de la condition d'un véhicule selon la revendication 7, dans lequel:

les moyens de commande (20) règlent l'angle des moyens de vérification de la condition d'un véhicule (30; 60) à une plus grande amplitude lorsque le rayon de la courbe de la route sur laquelle le véhicule en question roule est plus petit.

9. Appareil de surveillance de la condition d'un véhicule selon la revendication 7, dans lequel:

les moyens de commande (20) ne règlent pas l'angle des moyens de vérification de la condition d'un véhicule (30; 60) si le rayon de la courbe de la route sur laquelle le véhicule en question roule est égal ou supérieur à une valeur prédéterminée.

**10.** Appareil de surveillance de la condition d'un véhicule selon la revendication 1, dans lequel:

les moyens de commande (20) déterminent une position de départ de commande à laquelle les moyens de commande (20) commencent la commande pour régler l'angle des moyens de vérification de la condition d'un véhicule (30; 60) sur la base d'un rayon d'une courbe de la route sur laquelle le véhicule en question roule.

**11.** Appareil de surveillance de la condition d'un véhicule selon la revendication 10, dans lequel:

les moyens de commande (20) commencent la commande pour régler l'angle des moyens de vérification de la condition d'un véhicule (30; 60) à une position plus proche du point de convergence lorsque le rayon de la courbe de la route sur laquelle le véhicule en question roule est plus petit.

**12.** Appareil de surveillance de la condition d'un véhicule selon la revendication 1, comprenant en outre:

des moyens de détection de la vitesse d'un véhicule (40) destinés à détecter la vitesse du véhicule; dans lequel:

les moyens de commande (20) déterminent l'angle des moyens de vérification de la condition d'un véhicule (30; 60) sur la base d'un rayon d'une courbe de la route sur laquelle le véhicule en question roule et de la vitesse du véhicule détectée par les moyens de détection de la vitesse d'un véhicule (40).

**13.** Appareil de surveillance de la condition d'un véhicule selon la revendication 1, comprenant en outre:

des moyens de détection de la vitesse d'un véhicule (40) destinés à détecter la vitesse du véhicule; dans lequel:

les moyens de commande (20) déterminent une position de départ de commande à laquelle les moyens de commande (20) commencent la commande pour régler l'angle des moyens de vérification de la condition d'un véhicule (30; 60) sur la base d'un rayon d'une courbe de la route sur laquelle le véhicule en question roule et de la vitesse du véhicule détectée par les moyens de détection de la vitesse d'un véhicule (40).

**14.** Appareil de surveillance de la condition d'un véhicule selon la revendication 1, comprenant en outre:

des moyens de détection d'angle de braquage (50) destinés à détecter un angle de braquage du volant; dans lequel:

les moyens de commande (20) déterminent l'angle des moyens de vérification de la condition d'un véhicule (30; 60) sur la base de l'angle de braquage détecté par les moyens de détection d'angle de braquage (50).

**15.** Appareil de surveillance de la condition d'un véhicule selon la revendication 1, comprenant en outre:

des moyens de détection d'angle de braquage (50) destinés à détecter un angle de braquage du volant; dans lequel:

les moyens de commande (20) déterminent une position de départ de commande à laquelle les moyens de commande (20) commencent la commande pour régler l'angle des moyens de vérification de la condition d'un véhicule (30; 60) sur la base de l'angle de braquage détecté par les moyens de détection d'angle de braquage (50).

**16.** Appareil de surveillance de la condition d'un véhicule selon la revendication 1, comprenant en outre:

des moyens de détection d'angle de braquage (50) destinés à détecter un angle de braquage du volant; dans lequel:

les moyens de prise de décision concernant le point de convergence (10, 20) déterminent qu'un point de convergence est présent plus avant sur la route sur laquelle le véhicule en question roule si l'angle de braquage détecté par les moyens de détection d'angle de braquage (50) se trouve à l'intérieur d'une fourchette d'angles prédéterminée.

**17.** Appareil de surveillance de la condition d'un véhicule selon la revendication 1, dans lequel:

les moyens de vérification de la condition d'un véhicule sont constitués d'une surface de miroir d'un rétroviseur extérieur (30).

**18.** Appareil de surveillance de la condition d'un véhicule selon la revendication 1, dans lequel:

les moyens de vérification de la condition d'un véhicule sont des moyens de capture d'image (60) destinés à capturer une image dans une zone entourant le véhicule;
l'appareil de surveillance de la condition d'un véhicule comprend en outre des moyens d'affichage (70) destinés à afficher l'image capturée par les moyens de capture d'image (60); et
si les moyens de prise de décision concernant le point de convergence (10, 20) déterminent qu'un point de convergence est présent, les moyens de commande (20) établissent une direction de capture d'image le long de laquelle les moyens de capture d'image (60) capturent l'image vers l'autre route convergeant au point de convergence.

**19.** Procédé de surveillance de la condition d'un véhicule comprenant:

le fait de décider si un point de convergence d'une route sur laquelle un véhicule en question roule et une autre route est présent ou non plus avant sur la route sur laquelle le véhicule en question roule; et
le fait de régler l'angle des moyens de vérification de la condition d'un véhicule (30; 60) avec lequel le conducteur est capable de vérifier visuellement l'état de la circulation si un point de convergence est déterminé comme étant présent.

FIG.1

10

NAVIGATION DEVICE

GPS SENSOR — 11

MAP DATABASE — 12

20

SIDE MIRROR CONTROL DEVICE

CPU — 21

ROM — 22

RAM — 23

30

RIGHT SIDE MIRROR

FIG.2A

RIGHT-OF-WAY LINE

100

T1

YIELD LINE

FIG.2B

RIGHT-OF-WAY LINE

100

T2

YIELD LINE

FIG.3

RIGHT-OF-WAY LINE

CONTROL END POINT y

CONTROL START POINT x

YIELD LINE

FIG.4

| CONTROL START POINT COORDINATES x | CONTROL END POINT COORDINATES y | EXTENT OF MIRROR SURFACE ANGLE ADJUSTMENT |
|---|---|---|
| LONG : ◯DEGREES◯MINUTES◯SECONDS<br>LAT : ◯DEGREES◯MINUTES◯SECONDS | LONG : □DEGREES□MINUTES□SECONDS<br>LAT : □DEGREES□MINUTES□SECONDS | 5° |
| LONG : ◯DEGREES◯MINUTES◯SECONDS<br>LAT : ◯DEGREES◯MINUTES◯SECONDS | LONG : □DEGREES□MINUTES□SECONDS<br>LAT : □DEGREES□MINUTES□SECONDS | 3° |
| . . . | . . . | . . . |

FIG.5

```
                    ┌──────────────┐
                    │    START     │
                    └──────┬───────┘
                           │ ◄─────────────────────┐
                           ▼                        │
        ┌──────────────────────────────────┐    ┌──┐
  S10 ──│    REACHED MIRROR CONTROL         │────│ N│
        │       START POSITION?             │    └──┘
        └──────────────────────────────────┘
                           │ Y
                           ▼
        S20       ┌──────────────────┐
                  │   ADJUST MIRROR  │
                  │   SURFACE ANGLE  │
                  └──────────────────┘
                           │
                           ▼ ◄─────────────────────┐
        ┌──────────────────────────────────┐    ┌──┐
  S30 ──│  REACHED MIRROR CONTROL END       │────│ N│
        │       POINT POSITION?             │    └──┘
        └──────────────────────────────────┘
                           │ Y
                           ▼
        S40   ┌──────────────────────────┐
              │  RESET ADJUSTED MIRROR    │
              │     SURFACE ANGLE         │
              └──────────────────────────┘
                           │
                           ▼
                    ┌──────────────┐
                    │    RETURN    │
                    └──────────────┘
```

FIG.6

```
         10                              20a
  ┌─────────────────────┐      ┌─────────────────────┐
  │ NAVIGATION DEVICE   │      │ SIDE MIRROR CONTROL │          30
  │                     │      │ DEVICE              │    ┌──────────────┐
  │ ┌─────────────┐     │      │ ┌───────────┐       │    │ RIGHT SIDE   │
  │ │ GPS SENSOR  │─ 11 │─────▶│ │    CPU    │─ 21a  │───▶│ MIRROR       │
  │ └─────────────┘     │      │ └───────────┘       │    └──────────────┘
  │ ┌─────────────┐     │      │ ┌───────────┐       │
  │ │ MAP DATABASE│─ 12 │      │ │    ROM    │─ 22a  │
  │ └─────────────┘     │      │ └───────────┘       │
  └─────────────────────┘      │ ┌───────────┐       │
                               │ │    RAM    │─ 23   │
  ┌─────────────────────┐      │ └───────────┘       │
  │ VEHICLE SPEED       │─────▶│                     │
  │ SENSOR              │      └─────────────────────┘
  └─────────────────────┘
         40
```

## FIG. 7

CONTROL END POINT  RIGHT-OF-WAY LINE

×2

×1

YIELD LINE

## FIG.8

| CONTROL START POINT COORDINATES | | CONTROL END POINT COORDINATES | EXTENT OF MIRROR SURFACE ANGLE ADJUSTMENT |
|---|---|---|---|
| VEHICLE SPEED EQUAL TO OR LOWER THAN 10 kph <br> x1 | VEHICLE SPEED EQUAL TO OR HIGHER THAN 10 kph <br> x2 | y | |
| LONG:○DEGREES○MINUTES○SECONDS <br> LAT:○DEGREES○MINUTES○SECONDS | LONG:□DEGREES□MINUTES□SECONDS <br> LAT:□DEGREES□MINUTES□SECONDS | LONG:□DEGREES□MINUTES□SECONDS <br> LAT:□DEGREES□MINUTES□SECONDS | 5° |
| LONG:○DEGREES○MINUTES○SECONDS <br> LAT:○DEGREES○MINUTES○SECONDS | LONG:□DEGREES□MINUTES□SECONDS <br> LAT:□DEGREES□MINUTES□SECONDS | LONG:□DEGREES□MINUTES□SECONDS <br> LAT:□DEGREES□MINUTES□SECONDS | 3° |
| . . . | . . . | . . . | . . . |

20

FIG.9

```
                        ┌──────────────┐
                        │    START     │
                        └──────┬───────┘
                               │◄──────────────────────────┐
              ┌────────────────▼──────────────────┐        │
              ╱   REACHED MIRROR CONTROL            ╲   N   │
  S100       ╱    START POSITION x1?                 ╲──────┘
             ╲                                      ╱
              ╲────────────────┬──────────────────╱
                               │ Y
     ┌─────────────────────────▼──────────────────┐
     │    Y  ╱  VEHICLE SPEED EQUAL TO    ╲        │
     │      ╱   OR HIGHER THAN 10 kph?     ╲  S110 │
     │      ╲                             ╱        │
     │       ╲──────────┬────────────────╱         │
     │                  │ N ◄─────────────────────┐│
     │    ┌─────────────▼──────────────────┐      ││
     │   ╱   REACHED MIRROR CONTROL         ╲  N  ││
     │S120  START POSITION x2?               ╲────┘│
     │   ╲                                  ╱      │
     │    ╲──────────────┬─────────────────╱       │
     │                   │ Y                       │
     └──────────────────►│                         │
              ┌──────────▼────────────┐            │
              │   ADJUST MIRROR       │            │
  S20         │   SURFACE ANGLE       │            │
              └──────────┬────────────┘            │
                         │◄──────────────────────┐ │
              ┌──────────▼────────────┐     N    │ │
             ╱  REACHED MIRROR CONTROL END ╲──────┘ │
  S30       ╱   POSITION?                   ╲       │
            ╲                              ╱        │
             ╲────────────┬───────────────╱         │
                          │ Y
              ┌───────────▼───────────┐
              │   RESET ADJUSTED MIRROR│
  S40         │   SURFACE ANGLE        │
              └───────────┬───────────┘
                          │
                 ┌────────▼────────┐
                 │    RETURN       │
                 └─────────────────┘
```

**FIG.10A**

**FIG.10B**

WHEN R IS LARGE

T3
RIGHT-OF-WAY LINE

YIELD LINE

R

WHEN R IS SMALL

RIGHT-OF-WAY LINE

R

T4

YIELD LINE

**FIG.11**

| CURVE RADIUS | MIRROR SURFACE ANGLE ADJUSTMENT START POSITION | EXTENT OF MIRROR SURFACE ANGLE ADJUSTMENT |
|---|---|---|
| ~50R | 10 m FROM MERGING POINT | 5° |
| 50R~100R | 15 m FROM MERGING POINT | 3° |
| 100-m R OR GREATER | — | 0° |

**FIG.12**

R

L1

L2

$\theta$

FIG.13

START

S200  REACHED 100 m FROM MERGING POINT?  N

Y

Y  R<50?  S210

N

S220  REACHED 10 m FROM MERGING POINT?  N

S240  50≦R≦10?  N

Y

N  REACHED 15 m FROM MERGING POINT?  S250

Y

S230  ADJUST MIRROR SURFACE ANGLE BY 5°

S260  ADJUST MIRROR SURFACE ANGLE BY 3°

S270  REACHED MERGING POINT?  N

Y

S280  RESET ADJUSTED MIRROR SURFACE ANGLE

RETURN

FIG.14

| CURVE RADIUS | MIRROR SURFACE ANGLE ADJUSTMENT START POSITION | | EXTENT OF MIRROR SURFACE ANGLE ADJUSTMENT |
| --- | --- | --- | --- |
| | VEHICLE SPEED EQUAL TO OR LOWER THAN 10 kph | VEHICLE SPEED EQUAL TO OR HIGHER THAN 10 kph | |
| ~50R | 10m TO MERGING POINT | 15m TO MERGING POINT | 5° |
| 50R~100R | 15m TO MERGING POINT | 20m TO MERGING POINT | 3° |
| 100-m R OR GREATER | — | — | 0° |

EP 1 555 159 B1

EP 1 555 159 B1

FIG.15

25

## FIG.16

STEERING
ANGLE SENSOR    50

SIDE MIRROR CONTROL
DEVICE    20d

CPU — 21d

ROM — 22

RAM — 23

RIGHT SIDE
MIRROR    30

## FIG.17

| STEERING WHEEL STEERING ANGLE | EXTENT OF MIRROR SURFACE ANGLE ADJUSTMENT |
|---|---|
| ~5° | 0° |
| 5° ~ 10° | 5° |
| 10° OR GREATER | 0° |

FIG.18

START

S400

STEERING WHEEL STEERING ANGLE
EQUAL TO OR GREATER THAN 5° AND
EQUAL TO OR LESS THAN 10° ?

N

Y

S410    SET EXTENT OF MIRROR
SURFACE ANGLE
ADJUSTMENT TO 5°

S420

SET EXTENT OF MIRROR
SURFACE ANGLE
ADJUSTMENT TO 0°

RETURN

FIG.19

20e

10

NAVIGATION DEVICE

GPS SENSOR — 11

MAP DATABASE — 12

SIDE MIRROR CONTROL
DEVICE

CPU — 21e

ROM — 22

RAM — 23

60

ON-VEHICLE
CAMERA

70

IN-VEHICLE
MONITOR